# EUROPEAN PATENT APPLICATION

(11) **EP 4 614 690 A1**
(43) Date of publication of application: **10.09.2025**
(21) Application number: 25161402.0
(22) Date of filing: 03.03.2025
(51) Int. Cl.: H01M 50/15, H01M 50/176, H01M 50/188, H01M 50/553

(54) **SECONDARY BATTERY**

(30) Priority: 04.03.2024 KR 20240030973; 17.06.2024 KR 20240078331
(71) Applicant: SK On Co., Ltd., Seoul 03161 (KR)
(72) Inventor: LEE, Dong Hyee, 34124 Daejeon (KR); KWAK, Seung Ho, 34124 Daejeon (KR); PAK, Byeong Jun, 34124 Daejeon (KR); PARK, Seong Che, 34124 Daejeon (KR); CHEONG, Hoe Min, 34124 Daejeon (KR); JU, Seung Hoon, 34124 Daejeon (KR)
(74) Representative: Stolmár & Partner Patentanwälte PartG mbB

(57) **Abstract**

A secondary battery includes an electrode assembly including a cathode and an anode, a case in which the electrode assembly is housed, and a cap assembly which covers the case. The cap assembly includes a cap plate (180) which covers the case and includes a terminal hole (182) formed therein, a gasket (160) disposed on the cap plate around the terminal hole, and a rivet (150) which is inserted into the terminal hole to be coupled to the cap plate through the gasket, and includes a first protrusion part (155) inserted into an upper portion of the gasket.

## Description

### [BACKGROUND OF THE INVENTION]

### 1. Field of the Invention

The embodiments of the present application relate to a secondary battery, and more specifically, to a secondary battery which includes a case and an electrode assembly.

### 2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

The secondary battery may include an electrode assembly including a cathode, an anode and a separation membrane disposed between the cathode and the anode. The electrode assembly may be housed in an external case, such as a pouch, a circular case, a square case, etc., together with an electrolyte, to define a battery cell.

The case may include terminals for supplying current to the electrode assembly. In a terminal coupling structure for connecting the terminals and the electrode assembly, chemical and mechanical defects may be caused through an interface of the components.

### [SUMMARY OF THE INVENTION]

An object of the present disclosure is to provide a secondary battery having improved mechanical stability and operational reliability.

A secondary battery according to an aspect of the present disclosure includes: an electrode assembly which includes a cathode and an anode; a case in which the electrode assembly is housed; and a cap assembly which covers the case. The cap assembly includes: a cap plate which covers the case and includes a terminal hole formed therein; a gasket disposed on the cap plate around the terminal hole; and a rivet which is inserted into the terminal hole to be coupled to the cap plate through the gasket. The rivet includes a first protrusion part inserted into an upper portion of the gasket.

In some embodiments, the rivet may include a rivet body inserted into the terminal hole and a rivet wing extending from the rivet body in a horizontal direction, wherein the first protrusion part may extend downward from a lower surface of the rivet wing.

In some embodiments, a separation distance between the first protrusion part and the rivet body may be 30% or more of a length of the rivet wing.

In some embodiments, the gasket may include a vertical extension part which is in contact with an outer circumferential surface of the rivet body, and a gasket wing extending from the vertical extension part in the horizontal direction, wherein the first protrusion part is inserted into an upper portion of the gasket wing.

In some embodiments, the cap plate may include a second protrusion part inserted into a lower portion of the gasket wing.

In some embodiments, the second protrusion part extends upward from an upper surface of the cap plate.

In some embodiments, a plurality of the first protrusion parts and a plurality of the second protrusion parts are inserted into the gasket wing.

In some embodiments, the first protrusion parts and the second protrusion parts are arranged alternately in the horizontal direction.

In some embodiments, any one second protrusion part of the second protrusion parts may be overlapped with two or more first protrusion parts in a vertical direction.

In some embodiments, a distance of the second protrusion part from an outer circumferential surface of the gasket wing may be 15% or more of a length of the gasket wing.

In some embodiments, the cap assembly may further include an upper insulation part disposed on the cap plate to partially cover the gasket wing.

In some embodiments, the cap assembly may further include a lower insulation part disposed on a lower surface of the cap plate to be in contact with the vertical extension part of the gasket.

A secondary battery according to another aspect of the present disclosure includes: an electrode assembly which includes a cathode and an anode; a case in which the electrode assembly is housed; and a cap assembly which covers the case. The cap assembly includes: a cap plate which covers the case and includes a terminal hole formed therein; a gasket which is disposed on the cap plate around the terminal hole, and includes a vertical extension part and a gasket wing bent from the vertical extension part in a horizontal direction; and a rivet which is coupled to the cap plate through the gasket, and includes a rivet body inserted into the terminal hole and a rivet wing extending from the rivet body in the horizontal direction. The rivet wing or the cap plate includes a protrusion part which is engaged to the gasket wing.

In some embodiments, the gasket wing may be sandwiched between the rivet wing and the cap plate.

In some embodiments, the vertical extension part and the gasket wing may be a member integrally formed with each other.

In some embodiments, the protrusion part may include a first protrusion part protruding downward from a lower surface of the rivet wing.

In some embodiments, the protrusion part may include a second protrusion part protruding upward from an upper surface of the cap plate.

In some embodiments, the case may be a square case.

In some embodiments, the cap assembly may further include a terminal plate disposed on the rivet.

According to the above-described embodiments, the gasket and the rivet of the cap assembly of the secondary battery may include wing parts which extend in the horizontal direction, respectively. Accordingly, inflow of external foreign substances and electrolyte leakage may be effectively blocked, while increasing coupling stability between the gasket and the rivet.

According to the embodiments of the present disclosure, the rivet wing may include a protrusion part inserted into an upper portion of the gasket wing. In some embodiments, the cap plate of the cap assembly may include a protrusion part inserted into a lower portion of the gasket wing. Due to the protrusion parts, it is possible to more effectively block electrolyte leakage and enhance the stability of the terminal coupling structure.

The secondary battery manufactured using an electrolyte injection device of the present disclosure may be widely applied to green technology fields such as an electric vehicle, and a battery charging station, as well as other solar power generation and wind power generation using the batteries. The secondary battery may be used in an eco-friendly electric vehicle, and a hybrid vehicle, etc., which are intended to prevent climate change by suppressing air pollution and greenhouse gas emissions.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic perspective view illustrating a secondary battery according to exemplary embodiments;
FIG. 2 is a schematic partial cross-sectional view illustrating the secondary battery according to exemplary embodiments;
FIGS. 3 and 4 are partial enlarged cross-sectional views illustrating a terminal coupling structure of a cap assembly according to exemplary embodiments;
FIGS. 5 and 6 are partial enlarged cross-sectional views illustrating a terminal coupling structure of the cap assembly according to exemplary embodiments;
FIGS. 7 and 8 are partial enlarged cross-sectional views illustrating terminal coupling structures of the cap assembly according to exemplary embodiments; and
FIGS. 9 to 11 are partial enlarged cross-sectional views illustrating terminal coupling structures of the cap assembly according to exemplary embodiments.

### [DETAILED DESCRIPTION OF THE INVENTION]

Exemplary embodiments provided through the present disclosure will be described in more detail with reference to the accompanying drawings. However, the drawings and embodiments attached to the present specification serve to further understand the technical sprit of the present disclosure, such that the present disclosure should not be construed as being limited only to the matters illustrated and described in these drawings and embodiments.

As used herein, the terms indicating space/locations such as a "lower portion," an "upper portion," "below" and "upper" are used in a relative sense to distinguish between components, and do not limit the absolute order or locations.

The term "connected" as used herein encompasses the case where two different components are directly connected, and the case where these components are indirectly connected through an intermediate component.

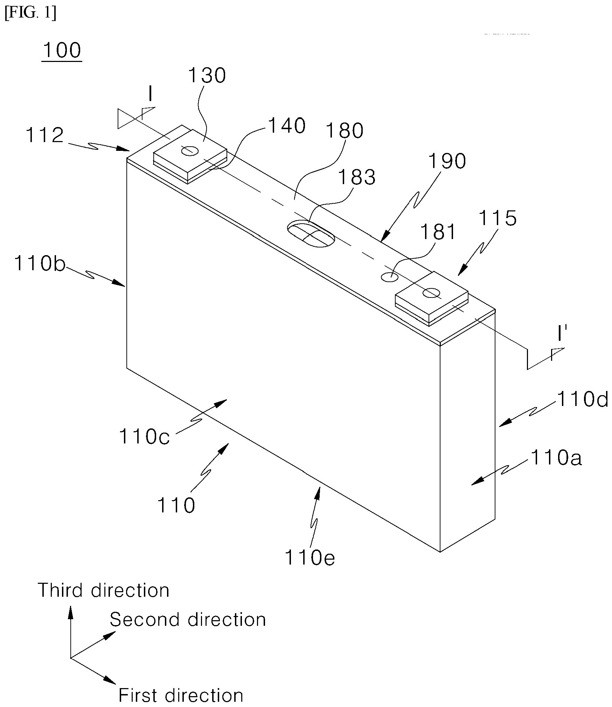

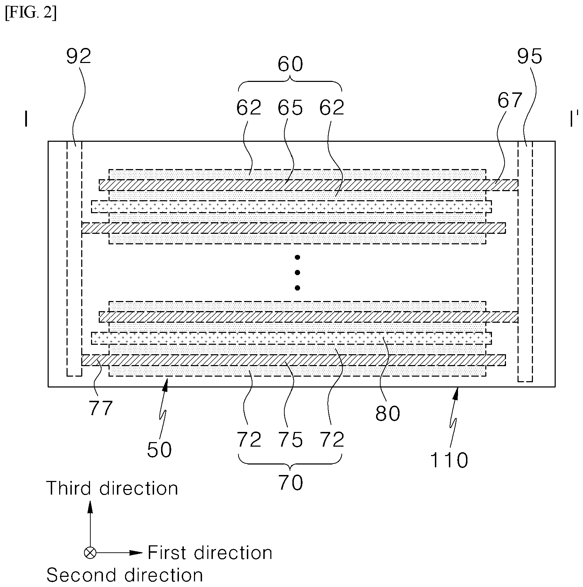

FIG. 1 is a schematic perspective view illustrating a secondary battery according to exemplary embodiments. FIG. 2 is a schematic partial cross-sectional view illustrating the secondary battery according to exemplary embodiments. For example, FIG. 2 is a partial cross-sectional view taken on line I-I' of FIG. 1 in a third direction.

In FIGS. 1 and 2, the first direction, the second direction and the third direction may be a longitudinal direction, a width direction and a height direction of the secondary battery or a case 110, respectively. A direction opposite to the direction indicated by the arrow may also be described as the same direction. The definition of the directions may be substantially equally applied to the remaining drawings.

Referring to FIGS. 1 and 2, a secondary battery 100 may include the case 110 and an electrode assembly 50 housed in the case 110.

As shown in FIG. 1, the case 110 may have a square cylinder shape, for example, in the form of a hexagonal column. However, the shape of the case 110 may be appropriately changed in consideration of subjects to which the secondary batteries are applied, the desired capacity/output and the like. For example, the case 110 may have a circular cylinder shape, a coin shape, etc.

The case 110 may include a first side surface 110a and a second side surface 110b which face each other in the first direction. The case 110 may include a front surface 110c and a rear surface 110d which face each other in the second direction. The case 110 may include a lower surface 110e included at one end in the third direction, and a cap assembly 190 may be coupled or assembled to an upper portion of the case 110 in the third direction. The upper portion of the case 110 may be closed or sealed by the cap assembly 190.

The electrode assembly 50 may include repeatedly stacked cathodes 70 and anodes 60. In some embodiments, the cathodes 70 and the anodes 60 may be alternately and repeatedly stacked in the third direction with a separation membrane 80 interposed therebetween.

The cathode 70 may include a cathode current collector 75 and cathode active material layers 72 coated on surfaces (e.g., an upper surface and a lower surface in the third direction) of the cathode current collector 75. The cathode current collector 75 may include stainless steel, nickel, aluminum, titanium, or an alloy thereof.

The cathode active material layer 72 includes a lithium-containing cathode active material, and the secondary battery 100 may be provided as a lithium secondary battery.

The lithium-containing cathode active material may include lithium-nickel oxide, lithium-cobalt oxide, lithium-manganese oxide, lithium-nickel-cobalt-manganese oxide, lithium iron phosphate compound, lithium-nickel-aluminum oxide, lithium-cobalt-aluminum oxide, etc.

The anode 60 may include an anode current collector 65 and anode active material layers 62 coated on surfaces (e.g., an upper surface and a lower surface in the third direction) of the anode current collector 65. The anode current collector 65 may include copper, stainless steel, nickel, titanium, or an alloy thereof.

The anode active material layer 62 may include a carbon-based active material such as natural graphite or artificial graphite as an anode active material and/or a silicon-containing active material (e.g., SiOx (0<x<2)). The anode active material may also include a silicon-carbon composite material.

The separation membrane 80 may include a porous polymer film made of a polyolefin polymer such as ethylene homopolymer, propylene homopolymer, ethylene/butene copolymer, ethylene/hexene copolymer, ethylene/methacrylate copolymer, etc. The separation membrane 80 may also include a nonwoven fabric made of glass fiber having a high melting point, polyethylene terephthalate fiber, etc.

The separation membrane 80 may also include a ceramic-based material. For example, inorganic particles may be coated on the polymer film or dispersed in the polymer film to improve heat resistance.

The cathodes 70 and the anodes 60 may be repeatedly and alternately laminated with the separation membrane 80 interposed therebetween by winding, stacking, zigzag-folding, etc. of the separation membrane 80, thus to form the electrode assembly 50. In one embodiment, the electrode assembly 50 may be prepared in a j elly-roll shape.

One end of the cathode current collector 75 included in the cathode 70 of each layer may be provided as a cathode tab 77. One end of the anode current collector 65 included in the anode 60 of each layer may be provided as an anode tab 67.

The cathode tabs 77 may protrude to one side (e.g., adjacent to the second side surface 110b) in the first direction and be collected, thus to be connected to a cathode lead 92. The anode tabs 67 may protrude to the other side (e.g., adjacent to the first side surface 110a) in the first direction and be collected, thus to be connected to an anode lead 95.

In some embodiments, the cathode tabs 77 may be fused to each other and connected to the cathode lead 92. In one embodiment, the cathode tabs 77 may be fused together with the cathode lead 92. In some embodiments, the anode tabs 67 may be fused together and connected to the anode lead 95. In one embodiment, the anode tabs 67 may be fused together with the anode lead 95.

In FIG. 2, it is illustrated that the cathodes 70 and the anodes 60 are stacked in the third direction and connected to the electrode leads on both sides in the first direction. However, the stacking direction and the electrode lead connection positions of the cathodes 70 and the anodes 60 may be appropriately changed in consideration of the size of the case 110 and the desired capacity/output of the battery.

In some embodiments, the electrode assembly 50 may be housed within the case 110 together with an electrolyte. A non-aqueous electrolyte may be used as the electrolyte.

The non-aqueous electrolyte includes a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

The electrode leads (the cathode lead 92 and the anode lead 95) may be connected to electrode terminal parts 112 and 115 included in the cap assembly 190, respectively. The cathode lead 92 may be connected to a cathode terminal part 112, and the anode lead 95 may be connected to an anode terminal part 115.

The cap assembly 190 includes a cap plate 180 exposed to an outside of the secondary battery 100, and the case 110 in which the electrode assembly 50 is housed may be sealed by the cap plate 180.

The cap plate 180 may further include a vent part 183 and an electrolyte injection part 181. The vent part 183 and the electrolyte injection part 181 include a vent hole and an electrolyte injection hole, respectively, and may include a plug or plate configured to seal the vent hole and the electrolyte injection hole.

The vent part 183 and the electrolyte injection part 181 may be formed between the cathode terminal part 112 and the anode terminal part 115.

The electrode terminal parts 112 and 115A may have a terminal coupling structure formed therein to be electrically connected or coupled with the electrode leads 92 and 95, respectively. Configurations and structure of the cap assembly 190 and the terminal coupling structure will be described in more detail below.

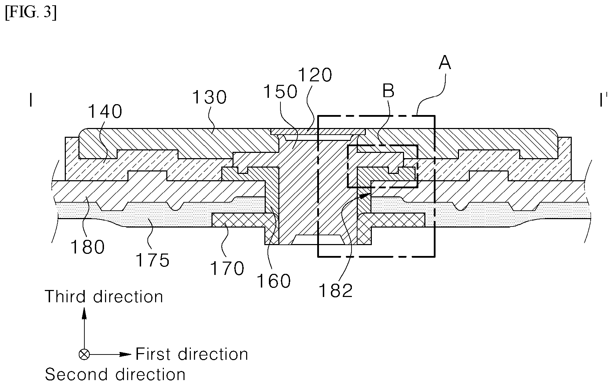

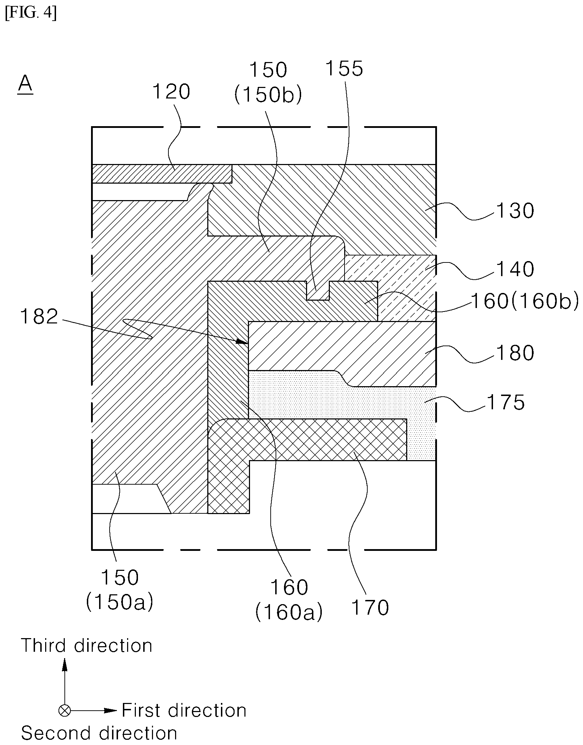

FIGS. 3 and 4 are schematic partial enlarged cross-sectional views illustrating a terminal coupling structure of a cap assembly according to exemplary embodiments. For example, FIG. 3 is a cross-sectional view of the terminal coupling structure taken on line I-I' of FIG. 1 in the third direction. FIG. 4 is a partial enlarged cross-sectional view of an area A of FIG. 3.

Referring to FIG. 3, the terminal coupling structure included in the cap assembly 190 may include a terminal plate 130, an upper insulation part 140, a rivet 150 and a gasket 160. The terminal plate 130 may be exposed to the outside of the secondary battery 100 to be provided as a substantial external terminal. A terminal post 120 may be inserted into a central portion of the terminal plate 130.

The upper insulation part 140 may include an insulation material such as a resin material. The upper insulation part 140 may be disposed on an upper surface of the cap plate 180 to support and fix a lower portion of the terminal plate 130. The terminal plate 130 and the cap plate 180 may be insulated from each other by the upper insulation part 140.

The rivet 150 may be inserted by penetrating the terminal plate 130 and the upper insulation part 140. An upper portion of the rivet 150 may be in contact or coupled with the terminal post 120. The terminal plate 130 and the upper insulation part 140 may be welded or fastened to the cap assembly 190 through the upper portion of the rivet 150.

The terminal plate 130, the terminal post 120 and the rivet 150 may include a conductive material such as metals or an alloy thereof.

The gasket 160 may fix the rivet 150 to the cap plate 180. The gasket 160 may seal a space between the cap plate 180 and the rivet 150. The gasket 160 may include an insulation resin material such as a perfluoroalkoxy (PFA) resin.

The cap plate 180 may include a terminal hole 182. A gasket 160 may be placed on the cap plate 180 around the terminal hole 182. The rivet 150 may be inserted into the terminal hole 182.

The terminal coupling structure may be electrically connected to the electrode lead 92 or 95 through a lead terminal 170. A lower insulation part 175 is disposed on a lower surface of the cap plate 180 to insulate the lead terminal 170 and the cap plate 180 from each other. The lower insulation part 175 may include a resin material substantially the same as or similar to the upper insulation part 140.

Referring to FIG. 4, the rivet 150 may include a rivet body 150a and a rivet wing 150b. The gasket 160 may include a vertical extension part 160a and a gasket wing 160b.

The rivet body 150a may refer to a portion which extends in a vertical direction (e.g., the third direction), and penetrates the terminal plate 130 and the cap plate 180. The rivet wing 150b may refer to a portion which extends in a horizontal direction (e.g., in the first direction) from an upper portion of the rivet body 150a. The rivet wing 150b may be formed as an integral member with the rivet body 150a.

The vertical extension part 160a of the gasket 160 extends in the third direction, and may be in contact with an outer circumferential surface of the rivet body 150a. The vertical extension part 160a may also be in contact with inner circumferential surfaces of the cap plate 180 and the lower insulation part 175. The gasket wing 160b may refer to a portion which is bent or extends in the horizontal direction (for example, in the first direction) from an upper portion of the vertical extension part 160a. The gasket wing 160b may be formed as an integral member with the vertical extension part 160a.

The gasket wing 160b may be sandwiched between the rivet wing 150b and the cap plate 180. According to exemplary embodiments, the rivet wing 150b may be seated on the gasket wing 160b. The rivet wing 150b may be in contact with the upper surface of the gasket wing 160b to be fastened to the cap plate 180 and the terminal plate 130. Accordingly, the rivet 150 may be stably fixed to the electrode terminal parts 112 and 115.

In addition, the vertical extension part 160a may be in contact with the cap plate 180 and the lower insulation part 175 to surround the outer circumferential surface of the rivet body 150a. Therefore, riveting stability may be further enhanced.

According to embodiments of the present disclosure, the rivet wing 150b may include a first protrusion part 155. The first protrusion part 155 may extend from a lower surface of the rivet wing 150b to be inserted into an upper portion of the gasket wing 160b.

The first protrusion part 155 may be integrally formed with the rivet wing 150b, and may extend downward from the upper surface of the gasket wing 160b in the third direction. The gasket wing 160b may include a first recess into which the first protrusion part 155 is inserted.

According to the above-described embodiments, fusion stability or coupling stability of the rivet 150 and the gasket 160 may be further reinforced by the first protrusion part 155. Accordingly, inflow of external foreign substances occurring in the electrode terminal parts 112 and 115 and leakage of the electrolyte housed inside the case 110 may be prevented.

The first protrusion part 155 may press the gasket wing 160b downward from the top of the gasket wing 160b. Accordingly, the leakage of the electrolyte occurring at an interface of the gasket 160 and the cap plate 180 may be effectively prevented.

The upper insulation part 140 may be formed on the cap plate 180 to partially cover the gasket wing 160b. The upper insulation part 140 may cover a portion of the gasket wing 160b which protrudes outward from an outer circumferential surface of the rivet wing 150b in the horizontal direction.

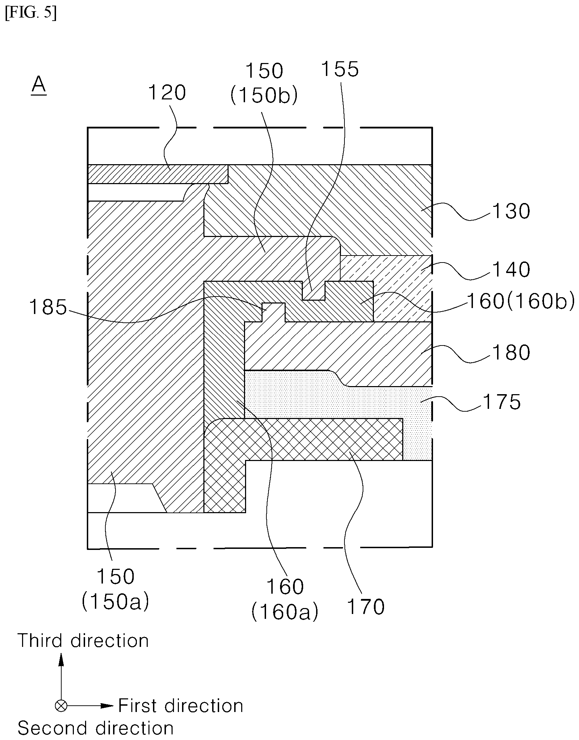

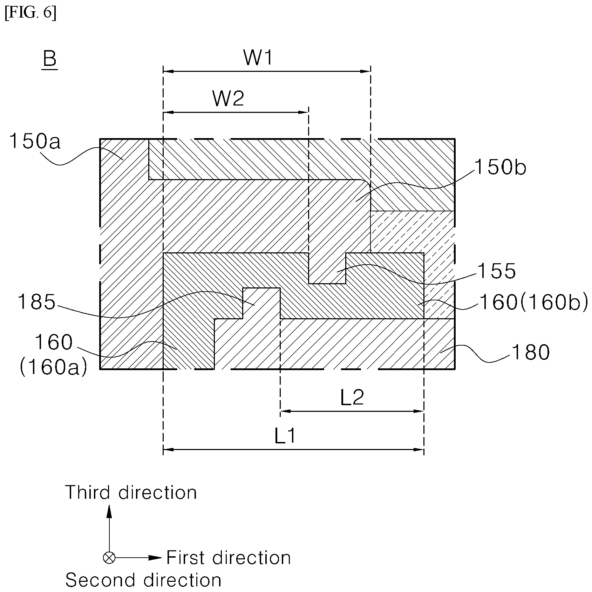

FIGS. 5 and 6 are partial enlarged cross-sectional views illustrating a terminal coupling structure of the cap assembly according to exemplary embodiments. FIG. 6 is an enlarged cross-sectional view illustrating the coupling of the rivet, the gasket and the cap plate of FIG. 5 (an area B of FIG. 3).

Referring to FIG. 5, the cap plate 180 may include a second protrusion part 185. The second protrusion part 185 may extend from the upper surface of the cap plate 180 to be inserted into a lower portion of the gasket wing 160b.

The second protrusion part 185 may be integrally formed with the cap plate 180, and may extend upward from the lower surface of the gasket wing 160b in the third direction. The gasket wing 160b may include a second recess into which the second protrusion part 185 is inserted.

According to the above-described embodiments, the fusion stability or coupling stability of the gasket 160 and the cap plate 180 may be further enhanced by the second protrusion part 185. Accordingly, the inflow of external foreign substances occurring in the electrode terminal parts 112 and 115 and the leakage of the electrolyte housed inside the case 110 may be more effectively prevented.

In some embodiments, the first and second protrusion parts 155 and 185 may press the gasket wing 160b in both directions. In addition, the first and second protrusion parts 155 and 185 may function as teeth or screws that engage the gasket wing 160b. Accordingly, the leakage of the electrolyte occurring at the interface of the gasket 160 and the cap plate 180 may be effectively prevented while improving the riveting stability.

Referring to FIG. 6, a separation distance W2 between the first protrusion part 155 and the rivet body 150a may be about 30% or more of a length W1 of the rivet wing 150b. The separation distance W2 of the first protrusion part 155 may be the shortest distance in the first direction from the outer circumferential surface of the rivet body 150a to an inner circumferential surface of the first protrusion part 155.

In some embodiments, the separation distance W2 of the first protrusion part 155 may be about 40% or more, about 50% or more, or about 60% or more of the length W1 of the rivet wing 150b. In one embodiment, the separation distance W2 of the first protrusion part 155 may be about 40% to 90%, about 50% to 90%, about 55% to 85%, or about 60% to 80% of the length W1 of the rivet wing 150b.

Within the above separation distance range, the blocking of the electrolyte leakage and the compression of the gasket wing 160b through the first protrusion part 155 may be effectively implemented.

In some embodiments, a separation distance L2 of the second protrusion part 185 from an outer circumferential surface of the gasket wing 160b may be about 15% or more of a length L1 of the gasket wing 160b. For example, the separation distance L2 of the second protrusion part 185 may be the shortest distance in the first direction from the outermost circumferential surface of the gasket wing 160b to an outer circumferential surface of the second protrusion part 185.

In some embodiments, the separation distance L2 of the second protrusion part 185 may be about 20% or more, about 30% or more, about 40% or more, or about 50% or more of the length L1 of the gasket wing 160b (a length in the first direction). In one embodiment, the separation distance L2 of the second protrusion part 185 may be 20% to 90%, 30% to 90%, 40% to 80%, or 50% to 80% of the length L1 of the gasket wing 160b.

Within the above separation distance range, the blocking of the electrolyte leakage and the compression of the gasket wing 160b through the second protrusion part 185 may be effectively implemented.

In some embodiments, a height of the first protrusion part 155 (a height in the third direction) may be 0.1 mm to 1 mm. In one embodiment, the height of the first protrusion part 155 may be 0.1 mm to 0.5 mm. In one embodiment, the height of the first protrusion part 155 may be 0.1 mm to 0.4 mm, or 0.1 mm to 0.3 mm.

In some embodiments, a height of the second protrusion part 185 (a height in the third direction) may be 0.1 mm to 1 mm. In one embodiment, the height of the second protrusion part 185 may be 0.1 mm to 0.5 mm. In one embodiment, the height of the second protrusion part 185 may be 0.1 mm to 0.4 mm, or 0.1 mm to 0.3 mm.

Within the above-described height range of the protrusion part, a sufficient compressive force may be transmitted to the gasket wing 160b while preventing mechanical damage to the gasket wing 160b.

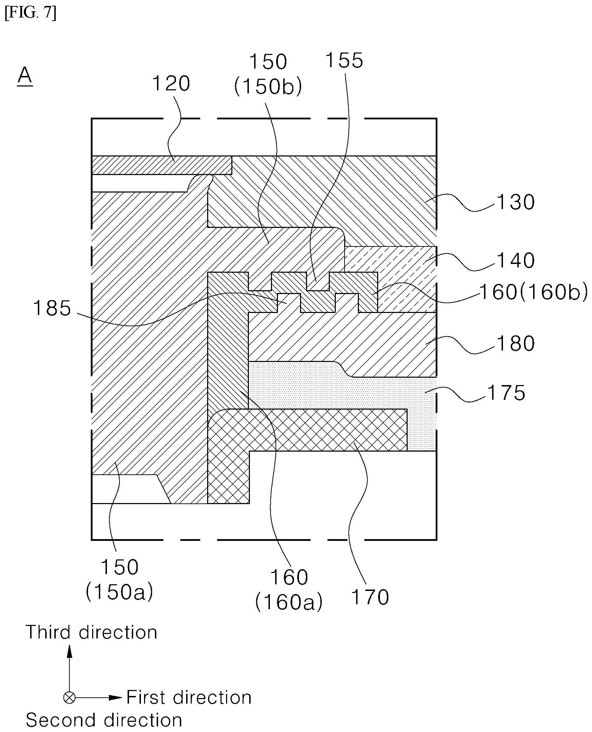

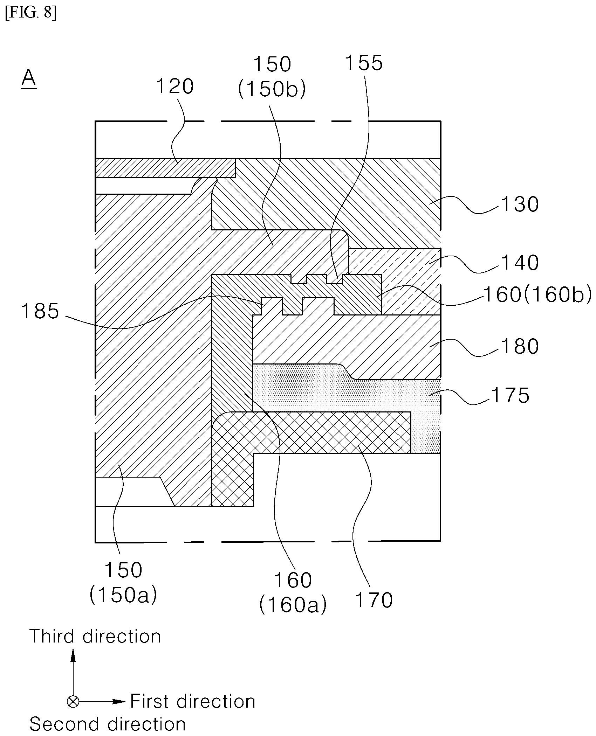

FIGS. 7 and 8 are partial enlarged cross-sectional views illustrating terminal coupling structures of the cap assembly according to exemplary embodiments.

Referring to FIG. 7, the rivet wing 150b may include a plurality of first protrusion parts 155. In some embodiments, the cap plate 180 may also include a plurality of second protrusion parts 185.

The plurality of first protrusion parts 155 are arranged in the first direction, and may be in contact with the upper portion of the gasket wing 160b. The plurality of second protrusion parts 185 are arranged in the first direction, and may be in contact with the lower portion of the gasket wing 160b.

In some embodiments, the first protrusion parts 155 and the second protrusion parts 185 may be alternately and repeatedly arranged in the first direction. Accordingly, screw coupling of the gasket wing 160b may be substantially implemented by the protrusion parts 155 and 185.

Referring to FIG. 8, the rivet wing 150b may include a plurality of first protrusion parts 155. In some embodiments, the cap plate 180 may also include a plurality of second protrusion parts 185.

Any one second protrusion part 185 of the second protrusion parts 185 may be overlapped with two or more first protrusion parts 155 in the height direction (third direction). In one embodiment, at least one other second protrusion part 185 of the second protrusion parts 185 may not be overlapped with the first protrusion part 155 in the height direction.

As described above, by imparting irregularity to the arrangement of the protrusion parts 155 and 185, the possibility of electrolyte leakage may be further reduced.

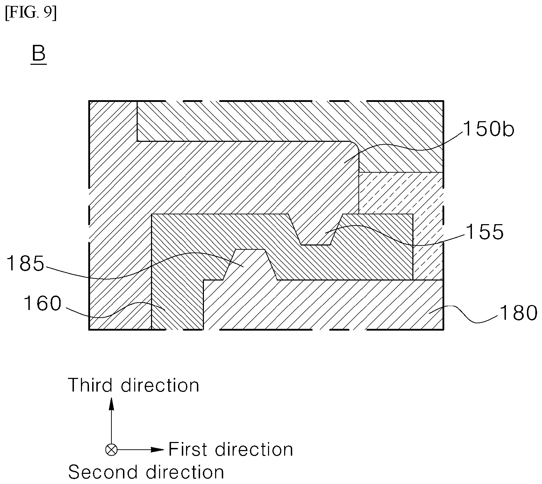

FIGS. 9 to 11 are partial enlarged cross-sectional views illustrating terminal coupling structures of the cap assembly according to exemplary embodiments. FIGS. 9 to 11 are enlarged cross-sectional views illustrating the area B of FIG. 3.

Referring to FIG. 9, the protrusion parts 155 and 185 may have a trapezoidal shape, respectively. In some embodiments, the first protrusion part 155 and the second protrusion part 185 may have trapezoidal shapes which are mutually opposite phases.

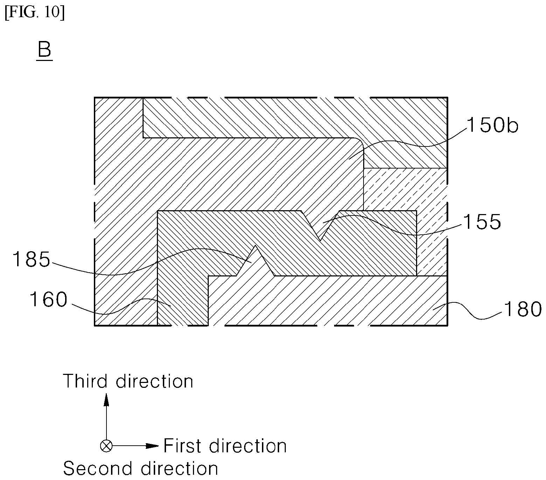

Referring to FIG. 10, the protrusion parts 155 and 185 may have a triangular shape, respectively. In some embodiments, the first protrusion part 155 and the second protrusion part 185 may have triangular shapes which are mutually opposite phases.

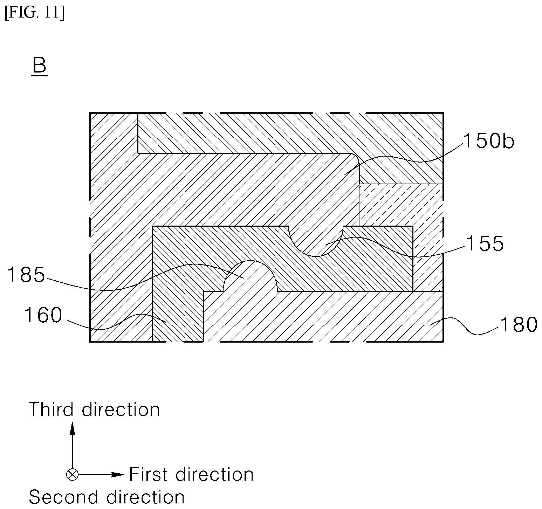

Referring to FIG. 11, the protrusion parts 155 and 185 may have a curved shape, for example, a semicircular shape, respectively. In some embodiments, the first protrusion part 155 and the second protrusion part 185 may have semicircular shapes which are mutually opposite phases.

The shapes of the protrusion parts 155 and 185 may be appropriately changed in consideration of prevention of the electrolyte leakage and terminal coupling stability.

## Claims

1. A secondary battery comprising:
an electrode assembly 50 which comprises a cathode 70 and an anode 60;
a case 110 in which the electrode assembly 50 is housed; and
a cap assembly 190 which covers the case 110, wherein the cap assembly 190 comprises:
a cap plate 180 which covers the case 110 and includes a terminal hole 182 formed therein;
a gasket 160 disposed on the cap plate 180 around the terminal hole 182; and
a rivet 150 which is inserted into the terminal hole 182 to be coupled to the cap plate 180 through the gasket 160, and includes a first protrusion part 155 inserted into an upper portion of the gasket 160.

2. The secondary battery according to claim 1, wherein the rivet 150 comprises a rivet body 150a inserted into the terminal hole 182 and a rivet wing 150b extending from the rivet body 150a in a horizontal direction, wherein the first protrusion part 155 extends downward from a lower surface of the rivet wing 150b.

3. The secondary battery according to claim 2, wherein a separation distance between the first protrusion part 155 and the rivet body 150a is 30% or more of a length of the rivet wing 150b.

4. The secondary battery according to claim 2 or 3, wherein the gasket 160 comprises a vertical extension part 160a which is in contact with an outer circumferential surface of the rivet body 150a, and a gasket wing 160b extending from the vertical extension part 160a in the horizontal direction, and
wherein the first protrusion part 155 is inserted into an upper portion of the gasket wing 160b.

5. The secondary battery according to claim 4, wherein the cap plate 180 comprises a second protrusion part 185 inserted into a lower portion of the gasket wing 160b.

6. The secondary battery according to claim 5, wherein the second protrusion part 185 extends upward from an upper surface of the cap plate 180.

7. The secondary battery according to claim 5 or 6, wherein a plurality of the first protrusion parts 155 and a plurality of the second protrusion parts 185 are inserted into the gasket wing 160b.

8. The secondary battery according to claim 7, wherein the first protrusion parts 155 and the second protrusion parts 185 are arranged alternately in the horizontal direction.

9. The secondary battery according to claim 7 or 8, wherein any one second protrusion part 185 of the second protrusion parts 185 is overlapped with two or more first protrusion parts 155 in a vertical direction.

10. The secondary battery according to one of claims 5 to 9, wherein a distance of the second protrusion part 185 from an outer circumferential surface of the gasket wing 160b is 15% or more of a length of the gasket wing160b.

11. The secondary battery according to one of claims 4 to 10, wherein the cap assembly 190 further comprises an upper insulation part 140 disposed on the cap plate 180 to partially cover the gasket wing 160b.

12. The secondary battery according to one of claims 4 to 11, wherein the cap assembly 190 further comprises a lower insulation part 175 disposed on a lower surface of the cap plate 180 to be in contact with the vertical extension part 160a of the gasket 160.

13. A secondary battery comprising:
an electrode assembly 50 which comprises a cathode 70 and an anode 60;
a case 110 in which the electrode assembly 50 is housed; and
a cap assembly 190 which covers the case 110, wherein the cap assembly 190 comprises:
a cap plate 180 which covers the case 110 and includes a terminal hole 182 formed therein;
a gasket 160 which is disposed on the cap plate 180 around the terminal hole 182, and comprises a vertical extension part 160a and a gasket wing 160b bent from the vertical extension part 160a in a horizontal direction; and
a rivet 150 which is coupled to the cap plate 180 through the gasket 160, and comprises a rivet body 150a inserted into the terminal hole 182 and a rivet wing 150b extending from the rivet body 150a in the horizontal direction,
wherein the rivet wing 150b or the cap plate 180 includes a protrusion part which is engaged to the gasket wing 160b.

14. The secondary battery according to claim 13, wherein the gasket wing 160b is sandwiched between the rivet wing 150b and the cap plate 180.

15. The secondary battery according to claim 13 or 14, wherein the vertical extension part 160a and the gasket wing 160b are a member integrally formed with each other.

16. The secondary battery according to one of claims 13 to 15, wherein the protrusion part includes a first protrusion part 155 protruding downward from a lower surface of the rivet wing 150b.

17. The secondary battery according to one of claims 13 to 17, wherein the protrusion part includes a second protrusion part 185 protruding upward from an upper surface of the cap plate 180.
